# EUROPÄISCHE PATENTANMELDUNG

(11) **EP 4 238 402 A1**
(43) Veröffentlichungstag der Anmeldung: **06.09.2023**
(21) Anmeldenummer: 23159552.1
(22) Anmeldetag: 02.03.2023
(51) Int. Cl.: A01B 63/24

(54) **LANDWIRTSCHAFTLICHES BODENBEARBEITUNGSGERÄT**

(30) Priorität: 02.03.2022 DE 102022104913
(71) Anmelder: Lemken GmbH & Co KG, 46519 Alpen (DE)
(72) Erfinder: Rentmeester, Joost, 4321 TN Kerkwerve (NL); Geerse, Peter, 4373 RW Biggekerke (NL); Struik, Lauwrens, 3247 CN Dirksland (NL)

(57) **Zusammenfassung**

Die vorliegende Erfindung betrifft ein landwirtschaftliches Bodenbearbeitungsgerät (1), insbesondere zur Bearbeitung von Reihenkulturen (18), mit einer Anbauvorrichtung (2) zur Befestigung an einem Zugfahrzeug sowie einem an der Anbauvorrichtung angeordneten Grundrahmen (3) mit mindestens einer, insbesondere an dem Grundrahmen (3) angeordneten, ersten Werkzeugeinheit (4) mit ersten Bodenbearbeitungswerkzeugen (5), und mindestens einer zweiten Werkzeugeinheit (6) mit zweiten Bodenbearbeitungswerkzeugen (7), welche insbesondere in einer Arbeitsrichtung vor der ersten Werkzeugeinheit (4) angeordnet ist. Gemäß der Erfindung ist die zweite Werkzeugeinheit (6) derart ausgestaltet und angeordnet, dass die zweiten Bodenbearbeitungswerkzeuge (7), insbesondere während einer Bodenbearbeitung durch die erste und zweite Werkzeugeinheit (4, 6), relativ zu der ersten Werkzeugeinheit (6) translatorisch und/oder rotatorisch verlagerbar sind.

## Beschreibung

Die vorliegende Erfindung betrifft ein landwirtschaftliches Bodenbearbeitungsgerät, insbesondere zur Bearbeitung von Reihenkulturen.

In der Landwirtschaft werden zur Bodenbearbeitung unterschiedlichste Geräte und Bodenwerkzeuge eingesetzt. Die Bodenbearbeitungsgeräte werden dabei üblicherweise an ein landwirtschaftliches Zugfahrzeug wie einen Traktor angebaut oder an dieses angehängt und gezogen. Eine Bodenbearbeitung im Sinne der Erfindung kann dabei sowohl die mechanische Bodenbearbeitung wie beispielsweise Pflügen, Hacken oder anhäufen von Dämmen, insbesondere bei Reihenkulturen, als auch die Aussaat von Bodenfrüchten sein. Bei Bodenbearbeitungsgeräten zum Bearbeiten von Reihenkulturen werden üblicherweise eine Mehrzahl an Bodenbearbeitungselementen nebeneinander angeordnet, um so eine größere Arbeitsbreite zu erreichen, wobei eine möglichst präzise Führung der Bodenbearbeitungselemente entlang der Reihenkulturen von Bedeutung ist.

Ein derartiges Bodenbearbeitungsgerät ist aus EP 3 766 319 A1 bekannt, welches mehrere landwirtschaftliche Arbeitswerkzeuge aufweist, die beim Bearbeiten des Bodens mit Hilfe eines Zugfahrzeuges linientreu zwischen Reihen von Feldpflanzen hindurchgeführt werden. Einem seitlichen Abdriften des Arbeitsgerätes und somit der Arbeitswerkzeuge bei Hangquerfahrten und/oder Kurvenfahrten des Zugfahrzeuges wirkt eine aktiv antreibbare Giereinrichtung zum Drehen der Arbeitswerkzeuge um eine Hochachse während des Hindurchführens zwischen den Reihen entgegen. Hierdurch soll eine linientreue Bodenbearbeitung auch bei Hangquerfahrten und/oder Kurvenfahrten des Zugfahrzeuges durchführbar sein.

Nachteilig ist jedoch, dass bei geringen Winkelabweichungen oder zu träger Regelung der Gierbewegung durch die rotatorische Verlagerung des Arbeitsgerätes, besonders bei großen Arbeitsbreiten, ein seitliches Verkanten der Arbeitswerkzeuge in Arbeitsrichtung hervorgerufen werden kann, wodurch es zu Schäden an Pflanzen der Reihenkultur kommen kann.

Es ist daher die Aufgabe der vorliegenden Erfindung, ein landwirtschaftliches Bodenbearbeitungsgerät, insbesondere zur Bearbeitung von Reihenkulturen, bereitzustellen, welches eine verbesserte Führung von Werkzeugen zur Bodenbearbeitung und eine verbesserte Arbeitsqualität ermöglicht.

Die Aufgabe wird gelöst durch ein landwirtschaftliches Bodenbearbeitungsgerät gemäß den Merkmalen des unabhängigen Patentanspruches 1. Vorteilhafte Ausführungsformen und Weiterbildungen der Erfindung sind den Unteransprüchen angegeben.

Gemäß Anspruch 1 umfasst ein landwirtschaftliches Bodenbearbeitungsgerät, insbesondere zur Bearbeitung von Reihenkulturen, eine Anbauvorrichtung zur Befestigung an einem Zugfahrzeug sowie einen an der Anbauvorrichtung angeordneten Grundrahmen mit mindestens einer, insbesondere an dem Grundrahmen angeordneten, ersten Werkzeugeinheit mit ersten Bodenbearbeitungswerkzeugen, und mindestens eine zweite Werkzeugeinheit mit zweiten Bodenbearbeitungswerkzeugen, welche insbesondere in einer Arbeitsrichtung vor der ersten Werkzeugeinheit angeordnet ist. Gemäß der Erfindung ist die zweite Werkzeugeinheit derart ausgestaltet und angeordnet, dass die zweiten Bodenbearbeitungswerkzeuge, insbesondere während einer Bodenbearbeitung durch die erste und zweite Werkzeugeinheit, relativ zu der ersten Werkzeugeinheit translatorisch und/oder rotatorisch verlagerbar sind.

Eine, insbesondere von der ersten Werkzeugeinheit unabhängige, Verlagerung der zweiten Werkzeugeinheit und/oder der zweiten Bodenbearbeitungswerkzeuge kann dabei im Wesentlichen in Form einer zumindest teilweisen seitlichen, insbesondere im Wesentlichen horizontalen, Verlagerung erfolgen. Unter einer seitlichen Verlagerung ist dabei eine Verlagerung im Wesentlichen in einem rechten Winkel zu einer Arbeitsrichtung zu verstehen. Eine horizontale Verlagerung kann im Wesentlichen parallel zum Boden erfolgen. Ein Grundrahmen des Bodenbearbeitungsgerätes kann sich in Arbeitsrichtung erstrecken, wobei in diesem Fall eine seitliche Verlagerung einer Verlagerung im Wesentlichen in einem rechten Winkel zu dem Grundrahmen erfolgen kann. Eine seitliche Verlagerung einer Werkzeugeinheit und/oder deren Bodenbearbeitungswerkzeuge kann dabei in Form einer im Wesentlichen linearen und/oder schwenkenden Bewegung erfolgen. Das Bodenbearbeitungsgerät kann derart ausgestaltet sein, dass die zweiten Bodenbearbeitungswerkzeuge, in vertikaler Richtung gesehen, in einer höheren Ebene wirken, insbesondere in den Boden eingreifen, als die ersten Bodenbearbeitungswerkzeuge.

Dadurch, dass die zweiten Bodenbearbeitungswerkzeuge relativ zu der ersten Werkzeugeinheit translatorisch und/oder rotatorisch verlagerbar sind, können die ersten und zweiten Bodenbearbeitungswerkzeuge unabhängig voneinander während der Bodenbearbeitung geführt werden. Dies ermöglicht eine verbesserte Führung und Wirkung der jeweiligen Bodenbearbeitungswerkzeuge, insbesondere bei der Bearbeitung von Reihenkulturen. Durch die verbesserte Führung der Bodenbearbeitungswerkzeuge können unerwünschte Beschädigungen an den Pflanzen vermieden werden und die Präzision der Bodenbearbeitung erhöht werden, wodurch die Arbeitsqualität des Bodenbearbeitungsgerätes verbessert werden kann. Vorzugsweise ist die zweite Werkzeugeinheit mittels einer Verlagerungsvorrichtung an der Anbauvorrichtung, dem Grundrahmen und/oder mindestens einer ersten Werkzeugeinheit verlagerbar angeordnet. Durch die Anordnung der Verlagerungsvorrichtung an der Anbauvorrichtung, dem Grundrahmen und/oder mindestens einer ersten Werkzeugeinheit kann der vorhandene Bauraum des Bodenbearbeitungsgerätes optimal ausgenutzt werden, um eine Relativbewegung der zweiten Werkzeugeinheit zu der ersten Werkzeugeinheit zu ermöglichen.

In einer bevorzugten Ausgestaltung sind die zweite Werkzeugeinheit und/oder die Verlagerungsvorrichtung derart ausgestaltet, dass die zweiten Bodenbearbeitungswerkzeuge einzeln oder in Gruppen verlagerbar sind. Einer Verlagerung der zweiten Bodenbearbeitungswerkzeuge kann dabei zumindest teilweise linear und/oder rotatorisch bzw. schwenkbar erfolgen. Die zweite Werkzeugeinheit kann einen zweiten Werkzeugrahmen aufweisen, an dem, insbesondere mittels Lagervorrichtungen, zweite Bodenbearbeitungswerkzeuge angeordnet sein können. Über den zweiten Werkzeugrahmen kann eine gemeinsame Verlagerung der zweiten Bodenbearbeitungswerkzeuge ermöglicht werden.

Bevorzugt weist die Verlagerungsvorrichtung mindestens einen Aktuator auf und ist in Form einer linearen Verschiebeeinheit oder einer parallelogrammartige Verschwenkeinheit ausgestaltet. Der Aktuator kann in Form eines hydraulisch oder pneumatisch wirkenden Zylinders oder in Form eines Spindeltriebs ausgestaltet sein. Eine parallelogrammartig ausgestaltete Verschwenkeinheit ermöglicht durch eine Rotation eine seitliche Verlagerung der Werkzeugeinheit. Eine rein lineare seitliche Verlagerung der Werkzeugeinheit kann durch die lineare Verschiebeeinheit erreicht werden, welche zudem den Vorteil bietet, in Arbeitsrichtung nur wenig Bauraum zu benötigen.

In einer bevorzugten Ausgestaltung weist die Verlagerungsvorrichtung in Form der linearen Verschiebeinheit mindestens eine grundrahmenseitig und/oder anbauvorrichtungsseitig angeordnete erste Montageplatte und mindestens eine werkzeugeinheitsseitig angeordnete zweite Montageplatte auf, wobei die Montageplatten über mindestens den Aktuator und insbesondere mindestens ein Führungselement, verschiebbar verbunden sind. Die erste Montageplatte kann lösbar mit dem Grundrahmen und/oder der Anbauvorrichtung verbunden sein. Ein Ende oder ein Abschnitt des Aktuators ist an der ersten Montageplatte festgelegt und ein diesem gegenüber verlagerbares Ende oder ein Abschnitt ist an der zweiten Montageplatte festgelegt, so dass bei einer Betätigung des Aktuators eine Relativbewegung zwischen den beiden Montageplatten erzeugt wird, die zu einer Relativbewegung der Werkzeugeinheiten führen kann. Zur Aufnahme von auf die Verlagerungsvorrichtung und insbesondere die Montageplatten wirkenden Kräften kann mindestens eine Führungsvorrichtung vorgesehen sein, welche einen störungsfreien Betrieb der Verlagerungsvorrichtung ermöglicht.

Gemäß einer bevorzugten Weiterbildung ist eine dritte Werkzeugeinheit vorgesehen, welche insbesondere in Arbeitsrichtung vor der zweiten Werkzeugeinheit angeordnet ist. Durch die Anordnung der dritten Werkzeugeinheit vor der zweiten Werkzeugeinheit, und insbesondere auch vor der ersten Werkzeugeinheit, können Vorarbeiten durchgeführt werden, welche störende Einflüsse, beispielsweise große Erdansammlungen, auf die folgende Werkzeugeinheit verringern und dadurch eine bessere Arbeitsqualität der folgenden Werkzeugeinheit ermöglichen. Die dritte Werkzeugeinheit kann dritte Bodenbearbeitungswerkzeuge aufweisen, welche an einem dritten Werkzeugrahmen angeordnet sein können.

Vorzugsweise sind die erste und/oder dritte Werkzeugeinheit relativ zur Anbauvorrichtung, insbesondere seitlich, verlagerbar ausgebildet, wobei eine Verlagerung der ersten und/oder dritten Werkzeugeinheit unabhängig von einer Verlagerung der zweiten Werkzeugeinheit ist. Die erste und/oder dritte Werkzeugeinheit können ebenfalls, insbesondere seitlich, verlagerbar ausgestaltet sein, was den Vorteil einer weiter verbesserten Führung der jeweiligen Bodenbearbeitungswerkzeuge und damit der Arbeitsqualität bietet. Eine Verlagerung der ersten und/oder dritten Werkzeugeinheit kann dabei jeweils unabhängig voneinander und besonders unabhängig von einer Verlagerung der zweiten Werkzeugeinheit erfolgen, so dass jede Werkzeugeinheit optimal geführt werden kann.

Bevorzugt ist die erste Werkzeugeinheit eine im Wesentlichen dammbildende und/oder dammbearbeitende Werkzeugeinheit, wobei die ersten Bodenbearbeitungswerkzeuge derart angeordnet sind, dass ein Damm aus Erde im Wesentlichen seitlich und/oder ein Zwischenraum neben oder zwischen zwei benachbarten Dämmen bearbeitet wird. Die erste Werkzeugeinheit und/oder die ersten Bodenbearbeitungswerkzeuge können in Form eines Häufelgerätes zur Dammbildung ausgebildet sein. Zur Dammbearbeitung kann die erste Werkzeugeinheit, insbesondere zusätzlich, erste Bodenbearbeitungswerkzeuge in Form von Hackwerkzeugen aufweisen, welche ein Hacken von Seiten der Dämme und/oder von Zwischenräumen zwischen oder seitlich von Dämmen ermöglicht.

Gemäß einer bevorzugten Ausgestaltung ist die zweite Werkzeugeinheit eine im Wesentlichen eine Oberseite eines Dammes bearbeitende Werkzeugeinheit, wobei insbesondere die zweiten Bodenbearbeitungswerkzeuge im Wesentlichen in Form von Hackwerkzeugen ausgebildet sind. Die zweiten Bodenbearbeitungswerkzeuge können im Wesentlichen auf der Oberseite eines Dammes außenseitig neben und in Arbeitsrichtung innerhalb der Reihenkultur, also zwischen den einzelnen Pflanzen der Reihenkultur, zum Hacken geführt werden. In Verbindung mit der seitlichen Verlagerung der zweiten Werkzeugeinheit kann dadurch ein Hacken entlang und zwischen den Pflanzen einer Reihenkultur verbessert und so die Arbeitsqualität verbessert werden.

Bevorzugt ist mindestens ein, insbesondere optischer, Sensor zur Erfassung mindestens einer Profilierung eines Bodens, insbesondere eines Dammes, und/oder einer Reihenkultur vorgesehen. Der Sensor kann mindestens einen Damm und/oder eine Pflanzenreihe der Reihenkultur erkennen, wodurch eine sensorbasierte Verlagerung mindestens einer Werkzeugeinheit ermöglicht werden kann. Denkbar ist, dass basierend auf einem Sensor mehrere Werkzeugeinheiten verlagert werden können oder dass mehrere Sensoren vorgesehen sind. Ein Sensor kann an der Anbauvorrichtung, dem Grundrahmen und/oder einer, insbesondere zu verlagernden, Werkzeugeinheit angeordnet sein, abhängig davon, wie der von dem Sensor zu erfassende Bereich optimal erfasst werden kann.

In einer bevorzugten Ausgestaltung ist eine Steuervorrichtung zur sensorbasierten Verlagerung mindestens einer Werkzeugeinheit vorgesehen. Durch die Steuervorrichtung kann ein Aktuator zur Verlagerung einer Werkzeugeinheit angesteuert werden. Die Steuervorrichtung kann in einem Gehäuse eines Sensors integriert sein, was insbesondere bei einem Sensor, welcher auf einer zu verlagernden Werkzeugeinheit angeordnet ist, den Vorteil bietet, dass der anzusteuernde Aktuator unmittelbar benachbart angeordnet sein kann und kein zusätzlicher Bauraum für die Steuervorrichtung benötigt wird. Durch die Steuervorrichtung können die erste und/oder dritte Werkzeugeinheit dammfolgend geführt werden. Die zweite Werkzeugeinheit kann durch die Steuereinheit einer, insbesondere dammoberseitig angeordneten, Reihenkultur folgend geführt werden. Weitere Einzelheiten der Erfindung sind den Figuren und der Figurenbeschreibung zu entnehmen, die eine bevorzugte Ausführung der Erfindung zeigen.

Es zeigen:
- Fig. 1: eine isometrische Ansicht eines landwirtschaftlichen Bodenbearbeitungsgerätes;
- Fig. 2: eine Detailansicht einer Verlagerungsvorrichtung einer zweiten Werkzeugeinheit; und
- Fig. 3: eine Detailansicht eines an der zweiten Werkzeugeinheit angeordneten Sensors.

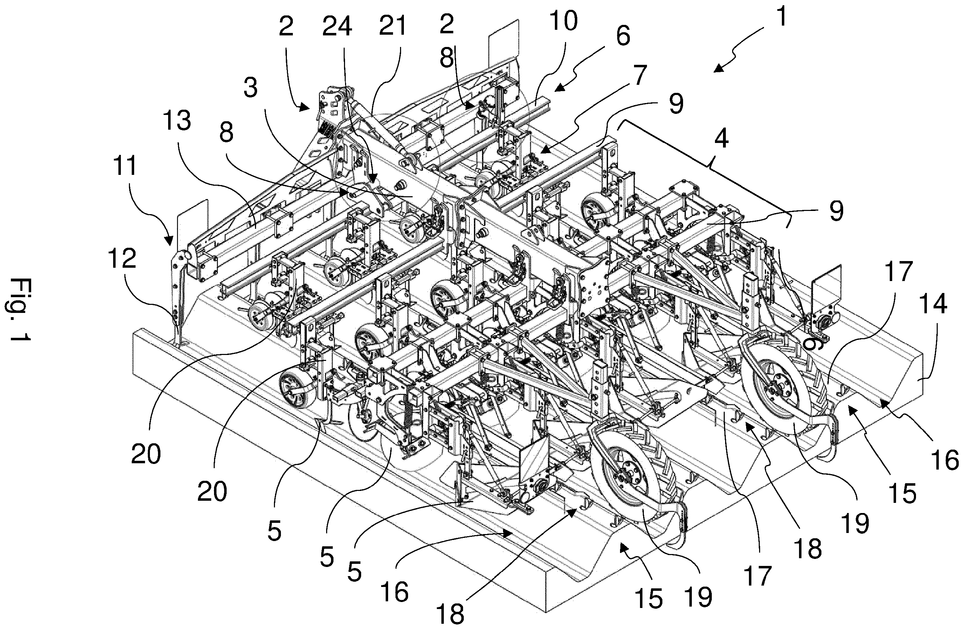

In Figur 1 ist eine isometrische Ansicht eines landwirtschaftlichen Bodenbearbeitungsgerätes 1 zur Bearbeitung von Reihenkulturen 18 dargestellt. Die hier dargestellten Reihenkulturen 18 sind jeweils auf einer Oberseite 17 eines Dammes 15 angeordnet, wobei zwischen benachbarten Dämmen 15 jeweils Zwischenräume 16 ausgebildet sind, welche in vertikaler Richtung tiefer angeordnet sind als die Oberseite 17 oder eine Flanke eines Dammes 15. Das Bodenbearbeitungsgerät 1 weist zum Anbau an ein Zugfahrzeug eine Anbauvorrichtung 2 auf. An der Anbauvorrichtung 2 ist ein Grundrahmen 3 angeordnet, welcher sich im Wesentlichen in Richtung einer Arbeitsrichtung des Bodenbearbeitungsgerätes 1 und sich im Wesentlichen parallel zu dem zu bearbeitenden Boden 14 erstreckt.

Zur Bodenbearbeitung ist an dem Grundrahmen 3 eine erste Werkzeugeinheit 4 mit ersten Bodenbearbeitungswerkzeugen 5 angeordnet. Die erste Werkzeugeinheit 4 umfasst dabei mehrere erste Werkzeugrahmen 9, welche benachbart zueinander an einem der Anbauvorrichtung 2 gegenüberliegendem Ende des Grundrahmens 3 quer zu diesem und der Arbeitsrichtung angeordnet sind. An den ersten Werkzeugrahmen 9 sind mittels Lagervorrichtungen 20 eine Mehrzahl an ersten Bodenbearbeitungswerkzeugen 5 angeordnet. Die Lagervorrichtungen 20 sind dabei parallelogrammartig ausgestaltet und ermöglichen den Bodenbearbeitungswerkzeugen 5 eine zumindest teilweise vertikale Verlagerung, wodurch Unebenheiten des Bodens 14 ausgeglichen werden können. Die dargestellte erste Werkzeugeinheit 4 ist in Form eines Häufelgerätes zur Dammbildung und als dammbearbeitende Werkzeugeinheit ausgestaltet.

Die ersten Bodenbearbeitungswerkzeuge 5 sind dabei derart angeordnet und ausgestaltet, dass im Wesentlichen die Seiten eines Dammes 15 und/oder ein Zwischenraum 16 neben oder zwischen zwei benachbarten Dämmen 15 bearbeitet wird, wobei die Bodenbearbeitungswerkzeuge 5 neben Werkzeugen zur Dammbildung auch in Form von Hackwerkzeugen ausgestaltet sind. Dies ermöglicht ein Hacken auf den Seiten der Dämme 15 und/oder in den Zwischenräumen 16 zwischen oder seitlich von Dämmen 15. In Arbeitsrichtung gesehen ist vor der ersten Werkzeugeinheit 4 eine weitere, zweite Werkzeugeinheit 6 angeordnet. Die Zweite Werkzeugeinheit 6 weist einen zweiten Werkzeugrahmen 10 auf, welcher an dem Grundrahmen 3 quer zur Arbeitsrichtung angeordnet ist. An dem zweiten Werkzeugrahmen 10 sind mittels Lagervorrichtungen 20 zweite Bodenbearbeitungswerkzeuge 7 angeordnet. Die Lagervorrichtungen 20 sind dabei parallelogrammartig ausgestaltet und ermöglichen den Bodenbearbeitungswerkzeugen 7 eine zumindest teilweise vertikale Verlagerung, wodurch Unebenheiten des Bodens 14 ausgeglichen werden können. Die zweite Werkzeugeinheit 6 dient der Bearbeitung einer Oberseite 17 eines Dammes 15 und der dort wachsenden Pflanzen der Reihenkultur 18. Die zweiten Bodenbearbeitungswerkzeuge 7 sind in Form von Hackwerkzeugen ausgestaltet. Gegenüber den ersten Bodenbearbeitungswerkzeugen 5 sind die zweiten Bodenbearbeitungswerkzeuge 7 höher angeordnet, da die zu bearbeitende Oberseite 17 oberhalb der durch die ersten Bodenbearbeitungswerkzeuge 5 zu bearbeitenden Seiten und Zwischenräume 16 der Dämme 15 liegt.

Gemäß der Erfindung ist die zweite Werkzeugeinheit 6 derart ausgestaltet und angeordnet, dass die zweiten Bodenbearbeitungswerkzeuge 7, insbesondere während einer Bodenbearbeitung durch die erste und zweite Werkzeugeinheit 4, 6, relativ zu der ersten Werkzeugeinheit 6 translatorisch und/oder rotatorisch verlagerbar sind. Eine Verlagerung der zweiten Bodenbearbeitungswerkzeuge 7 erfolgt gemeinsam über eine seitliche Verlagerung des zweiten Werkzeugrahmens 10, an dem alle zweiten Bodenbearbeitungswerkzeuge 7 angeordnet sind. Der zweite Werkzeugrahmen 10 ist über die Verlagerungsvorrichtung 8 mit dem Grundrahmen 3 verbunden. Die Verlagerungsvorrichtung 8 ist bauraumsparend als lineare Verschiebeeinheit 32 ausgebildet, welche eine rein seitliche Verlagerung des zweiten Werkzeugrahmens 10 und der daran angeordneten zweiten Bodenbearbeitungswerkzeuge 7 mittels eines Aktuators 24 ermöglicht. Eine Werkzeugeinheit 4, 6 kann jeweils zur Durchführung einer bestimmten Art der Bodenbearbeitung, beispielsweise Hacken, Säen, Häufeln, ausgestaltet sein und kann hierfür ein oder mehrere Bodenbearbeitungswerkzeuge 5, 7 umfassen, welche gleich oder unterschiedlich ausgestaltet sein können.

Um eine möglichst bodenparallele Ausrichtung des Bodenbearbeitungsgerätes 1 während der Bodenbearbeitung zu ermöglichen, sind in Arbeitsrichtung gesehen an einem hinteren ersten Werkzeugrahmen 9 zwei Räder 19 über tiefeneinstellbare Lagerungen angeordnet. Die Räder 19 laufen dabei jeweils in einem Zwischenraum 16 zwischen benachbarten Dämmen 15. Die Zwischenräume 16 werden zusätzlich durch eine dritte Werkzeugeinheit 11 und deren dritte Bodenbearbeitungswerkzeuge 12 bearbeitet. Die dritten Bodenbearbeitungswerkzeuge 12, hier in Form von Hackwerkzeugen dargestellt, sind ohne vertikal verstellbare Lagervorrichtungen an einem dritten Werkzeugrahmen 13 angeordnet und bearbeiten jeweils einen Zwischenraum 16 zwischen Dämmen 15. Die dritte Werkzeugeinheit 11 ist mit dem dritten Werkzeugrahmen 13 an einem anbauvorrichtungsseitigen Ende des Grundrahmens 3 befestigt. Die dritte Anbauvorrichtung 11 ist dabei in Arbeitsrichtung gesehen vor der zweiten Werkzeugeinheit 6 und vor der ersten Werkzeugeinheit 4 angeordnet.

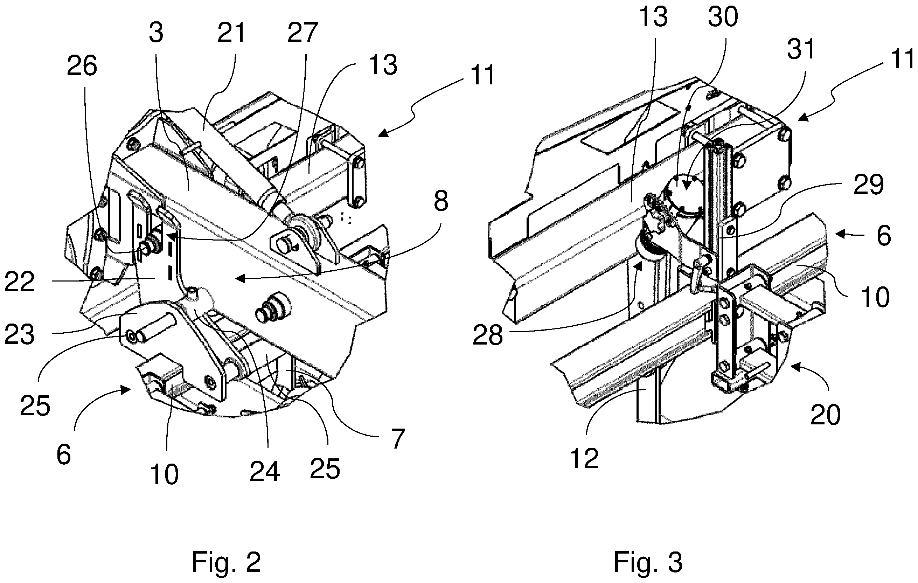

In Figur 2 ist eine Detailansicht der Verlagerungsvorrichtung 8 des Bodenbearbeitungsgerätes 1 dargestellt. Die Verlagerungsvorrichtung 8 weist zwei erste Montageplatten 22 auf, welche einander gegenüberliegend beiderseits an dem Grundrahmen 3 angeordnet sind, und zwei zweite Montageplatten 23, welche beabstandet und außenseitig der ersten Montageplatten 22 an dem zweiten Werkzeugrahmen 10 der zweiten Werkzeugeinheit 6 angeordnet sind. Die Montageplatten 22, 23 sind durch einen Aktuator 24 in Form eines Hydraulikzylinders verlagerbar miteinander wirkverbunden. Ein Ende des Aktuators 24, der Zylinder, ist dabei an den ersten Montageplatten 22 und/oder dem Grundrahmen 3 festgelegt und ein anderes, bewegliches Ende, die Kolbenstange, ist an den zweiten Montageplatten 23 festgelegt. Bei einer Betätigung des Aktuators 24 kommt es zu einer Relativbewegung zwischen den Montageplatten 22, 23. Durch diese Relativbewegung in seitlicher Richtung zwischen den ersten und zweiten Montageplatten 22, 23 wird eine seitliche Verlagerung des zweiten Werkzeugrahmens 10 und damit der zweiten Werkzeugeinheit 6 bewirkt.

Die ersten Montageplatten 22 weisen grundrahmenseitig eine Aussparung 27 auf, in der in einem montierten Zustand der Montageplatte 22 ein Lagerbolzen 26 angeordnet ist, welcher in dem Grundrahmen 3 festgelegt ist. An einem unteren Ende der ersten Montageplatten 22 sind zwei stangenförmige Führungselemente 25 angeordnet. Die Führungselemente 25 sind dabei ebenfalls mit einem Ende an den ersten Montageplatten 22 und/oder grundrahmenseitig festgelegt und mit einem anderen, verlagerbaren Ende, an den zweiten Montageplatten 23 festgelegt. Durch die Führungselemente 25 kann eine verkippungsfreie, seitliche Verlagerung der zweiten Werkzeugeinheit 6 ermöglicht werden. Ein Neigungswinkel des Grundrahmens 3 zur Anbauvorrichtung (nicht dargestellt) ist über ein oberseitig an dem Grundrahmen 3 und der Anbauvorrichtung angeordnetes Stellglied 21 einstellbar.

Zur Steuerung der Verlagerung der zweiten Werkzeugeinheit 6 ist ein Sensor 28 vorgesehen, welcher in Figur 3 dargestellt ist. Der Sensor 28 ist ein optischer Sensor in Form einer Kamera 30. Die Kamera 30 ist an einem Sensorträger 29 angeordnet, welcher mit dem zweiten Werkzeugrahmen 10 der zweiten Werkzeugeinheit 6 verbunden ist. Der Sensor 28 ist unmittelbar auf der zu verlagernden zweiten Werkzeugeinheit 6 angeordnet und ist auf die Pflanzen der Reihenkultur (nicht dargestellt) gerichtet, welche auf der Oberseite des Dammes wachsen und durch die zweite Werkzeugeinheit 6 bearbeitet werden sollen. In dem Gehäuse des Sensors 28 ist eine Steuervorrichtung 31 angeordnet, durch welche eine Ansteuerung des Aktuators (nicht dargestellt) zur seitlichen Verlagerung der zweiten Werkzeugeinheit 6 erfolgt.

### Bezugszeichen

| | | | |
|---|---|---|---|
| 1 | Bodenbearbeitungsgerät | 26 | Lagerbolzen |
| 2 | Anbauvorrichtung | 27 | Aussparung |
| 3 | Grundrahmen | 28 | Sensor |
| 4 | Erste Werkzeugeinheit | 29 | Sensorträger |
| 5 | Erstes Bodenbearbeitungswerkzeug | 30 | Kamera |
| 6 | Zweite Werkzeugeinheit | 31 | Steuervorrichtung |
| 7 | Zweites Bodenbearbeitungswerkzeug | 32 | Verschiebeeinheit |
| 8 | Verlagerungsvorrichtung | | |
| 9 | Erster Werkzeugrahmen | | |
| 10 | Zweiter Werkzeugrahmen | | |
| 11 | Dritte Werkzeugeinheit | | |
| 12 | Drittes Bodenbearbeitungswerkzeug | | |
| 13 | Dritter Werkzeugrahmen | | |
| 14 | Boden | | |
| 15 | Damm | | |
| 16 | Zwischenraum | | |
| 17 | Oberseite | | |
| 18 | Reihenkultur | | |
| 19 | Rad | | |
| 20 | Lagervorrichtung | | |
| 21 | Stellglied | | |
| 22 | Erste Montageplatte | | |
| 23 | Zweite Montageplatte | | |
| 24 | Aktuator | | |
| 25 | Führungselement | | |

## Patentansprüche

1. Landwirtschaftliches Bodenbearbeitungsgerät, insbesondere zur Bearbeitung von Reihenkulturen (18), mit einer Anbauvorrichtung (2) zur Befestigung an einem Zugfahrzeug sowie einem an der Anbauvorrichtung angeordneten Grundrahmen (3) mit mindestens einer, insbesondere an dem Grundrahmen (3) angeordneten, ersten Werkzeugeinheit (4) mit ersten Bodenbearbeitungswerkzeugen (5), und mindestens einer zweiten Werkzeugeinheit (6) mit zweiten Bodenbearbeitungswerkzeugen (7), welche insbesondere in einer Arbeitsrichtung vor der ersten Werkzeugeinheit (4) angeordnet ist, **dadurch gekennzeichnet, dass** die zweite Werkzeugeinheit (6) derart ausgestaltet und angeordnet ist, dass die zweiten Bodenbearbeitungswerkzeuge (7), insbesondere während einer Bodenbearbeitung durch die erste und zweite Werkzeugeinheit (4, 6), relativ zu der ersten Werkzeugeinheit (6) translatorisch und/oder rotatorisch verlagerbar sind.

2. Bodenbearbeitungsgerät nach Anspruch 1, **dadurch gekennzeichnet, dass** die zweite Werkzeugeinheit (6) mittels einer Verlagerungsvorrichtung (8) an der Anbauvorrichtung (2), dem Grundrahmen (3) und/oder mindestens einer ersten Werkzeugeinheit (4) verlagerbar angeordnet ist.

3. Bodenbearbeitungsgerät nach Anspruch 1 oder 2, **dadurch gekennzeichnet, dass** die zweite Werkzeugeinheit (6) und/oder die Verlagerungsvorrichtung (8) derart ausgestaltet sind, dass die zweiten Bodenbearbeitungswerkzeuge (7) einzeln oder in Gruppen verlagerbar sind.

4. Bodenbearbeitungsgerät nach einem der vorhergehenden Ansprüche, **dadurch gekennzeichnet, dass** die Verlagerungsvorrichtung (8) mindestens einen Aktuator (24) aufweist und in Form einer linearen Verschiebeeinheit (32) oder einer parallelogrammartige Verschwenkeinheit ausgestaltet ist.

5. Bodenbearbeitungsgerät nach einem der vorherigen Ansprüche, **dadurch gekennzeichnet, dass** die Verlagerungsvorrichtung (24) in Form der linearen Verschiebeinheit (32) mindestens eine grundrahmenseitig und/oder anbauvorrichtungsseitig angeordnete erste Montageplatte (22) und mindestens eine werkzeugeinheitsseitig angeordnete zweite Montageplatte (23) aufweist, wobei die Montageplatten (22, 23) über mindestens den Aktuator (24) und insbesondere mindestens ein Führungselement (25), verschiebbar verbunden sind.

6. Bodenbearbeitungsgerät nach einem der vorhergehenden Ansprüche, **dadurch gekennzeichnet, dass** eine dritte Werkzeugeinheit (11) vorgesehen ist, welche insbesondere in Arbeitsrichtung vor der zweiten Werkzeugeinheit (6) angeordnet ist.

7. Bodenbearbeitungsgerät nach einem der vorhergehenden Ansprüche, **dadurch gekennzeichnet, dass** die erste und/oder dritte Werkzeugeinheit (4, 11) relativ zur Anbauvorrichtung (2), insbesondere seitlich, verlagerbar ausgebildet sind, wobei eine Verlagerung der ersten und/oder dritten Werkzeugeinheit (4, 11) unabhängig von einer Verlagerung der zweiten Werkzeugeinheit (6) ist.

8. Bodenbearbeitungsgerät nach einem der vorhergehenden Ansprüche, **dadurch gekennzeichnet, dass** die erste Werkzeugeinheit (4) eine im Wesentlichen dammbildende und/oder dammbearbeitende Werkzeugeinheit ist, wobei die ersten Bodenbearbeitungswerkzeuge (5) derart angeordnet sind, dass ein Damm (15) aus Erde im Wesentlichen seitlich und/oder ein Zwischenraum (16) neben oder zwischen zwei benachbarten Dämmen (15) bearbeitet wird.

9. Bodenbearbeitungsgerät nach einem der vorhergehenden Ansprüche, **dadurch gekennzeichnet, dass** die zweite Werkzeugeinheit (6) eine im Wesentlichen eine Oberseite (17) eines Dammes (15) bearbeitende Werkzeugeinheit ist, wobei insbesondere die zweiten Bodenbearbeitungswerkzeuge (7) im Wesentlichen in Form von Hackwerkzeugen ausgebildet sind.

10. Bodenbearbeitungsgerät nach einem der vorhergehenden Ansprüche, **dadurch gekennzeichnet, dass** mindestens ein, insbesondere optischer, Sensor (28) zur Erfassung mindestens einer Profilierung eines Bodens (14), insbesondere eines Dammes (15), und/oder einer Reihenkultur (18) vorgesehen ist.

11. Bodenbearbeitungsgeräte nach einem der vorherigen Ansprüche, **dadurch gekennzeichnet, dass** eine Steuervorrichtung (31) zur sensorbasierten Verlagerung mindestens einer Werkzeugeinheit (4, 6, 11) vorgesehen ist.
